# EUROPEAN PATENT SPECIFICATION

(11) **EP 0 602 706 B1**
(45) Date of publication and mention of the grant of the patent: **01.04.1998**
(21) Application number: 93203380.6
(22) Date of filing: 02.12.1993
(51) Int. Cl.: F16H 63/30, F16D 65/20

(54) **Friction device for automatic planetary gear transmission**
Reibeinrichtung für ein automatisches Planetenradgetriebe
Dispositif de friction pour une transmission automatique à roues planétaires

(30) Priority: 17.12.1992 GB 9226318
(43) Date of publication of application: 22.06.1994
(73) Proprietor: Delphi France Automotive Systems, 92257 La Garenne-Colombes (FR)
(72) Inventor: Bromhorst, Albert, F-67310 Romanswiller (FR)
(74) Representative: Denton, Michael John

(56) References cited:
- EP-A- 0 349 111
- US-A- 3 450 005
- US-A- 4 787 494
- US-A- 5 016 521
- PATENT ABSTRACTS OF JAPAN vol. 10, no. 81 (M-465) 29 March 1986 & JP-A-60 222 628 (NISSAN)

## Description

This invention relates to an automatic transmission for a vehicle, and more particularly to a band brake in the automatic transmission which is used to control shifting between gear ratios.

Automatic transmissions for motor vehicle are well known, and typically comprise a planetary gear train positioned within a casing. The rotation of the gears in the planetary gear train relative to one another and to the casing is controlled in a predetermined way in order to provide for any one of a number of ratios for forward movement of the vehicle, and for reverse movement. The relative rotation of the gears is typically controlled by friction devices such as clutches and/or band brakes, which are actuated by hydraulic fluid. A band brake in an automatic transmission usually comprises a brake drum secured to and rotatable with one of the gears of the planetary gear train, the brake drum having an outer circumferential surface; a brake band positioned around the outer surface, one end of which is fixed relative to the casing; and a servomechanism attached to the other end of the brake band, the servomechanism being actuable to reduce the diameter of the brake band such that the brake band frictionally grips the outer surface of the brake drum to prevent rotation thereof relative to the casing. The servomechanism comprises a housing which is fixed relative to the casing and having an axially extending closed bore therein; a piston axially slidable in the bore and defining an apply chamber and a release chamber in the bore; a piston rod mounted on the piston at one end thereof and projecting out of the housing to engage the brake band at the other end thereof. Actuation of the servomechanism is controlled by pressurising hydraulic fluid in the apply and release chambers. Examples of the prior art arrangements are shown in GB 2077374A, EP 0190556A and GB 1315408. EP-A-0349111 discloses a transmission in accordance with the preamble of claim 1.

It is an object of the present invention to provide an automatic transmission having an improved band brake.

An automatic transmission in accordance with the present invention is characterised over EP-A-0349111 by the features specified in the characterising portion of claim 1.

Preferably, the spring is positioned in the second chamber between a shoulder on the piston rod and the piston.

A second spring is preferably positioned in the second chamber between an end wall of the closed bore and the piston.

The other end of the piston rod preferably extends into, and makes a sealing sliding fit in, an opening in the piston. Alternatively, the other end of the piston rod may be positioned in the second chamber.

The present invention is particularly applicable to an automatic transmission having a number of friction devices, only one of which is a band brake. Specifically, the band brake has an active roll in that a change of state of the band brake (that is, from applied to release, or release to applied) causes a shift in gear ratio in the automatic transmission. For such a band brake the change of state should be as smooth as possible in order to provide a smooth gear change. With regard to the above mentioned prior art, the present invention has the advantage of only requiring pressurised hydraulic fluid to be supplied to the first chamber. Further, the present invention provides progressive stopping of the brake drum rather than a sudden stop, thereby providing a smoother gear change. Further still, the present invention overcomes the problem of initial excessive wear of the brake band; does not require an increase in apply pressure as the brake band wears; requires a weaker spring for the return of the piston as the apply pressure is less than in the prior art arrangements; provides an increase in piston stroke; and does not require accurate setting of the length of the piston rod thereby being more tolerant to manufacturing variations and being easier to assemble.

The present invention will now be described, by way of example, with reference to the accompanying drawings, in which:-
Figure 1 is a side view of a band brake for use in an automatic transmission in accordance with the present invention;
Figure 2 is a cross-sectional view of the servomechanism and part of the brake band and brake drum of the band brake shown in Figure 1; and
Figure 3 is a cross-sectional view similar to that of Figure 2 showing an alternative arrangement of the servomechanism.

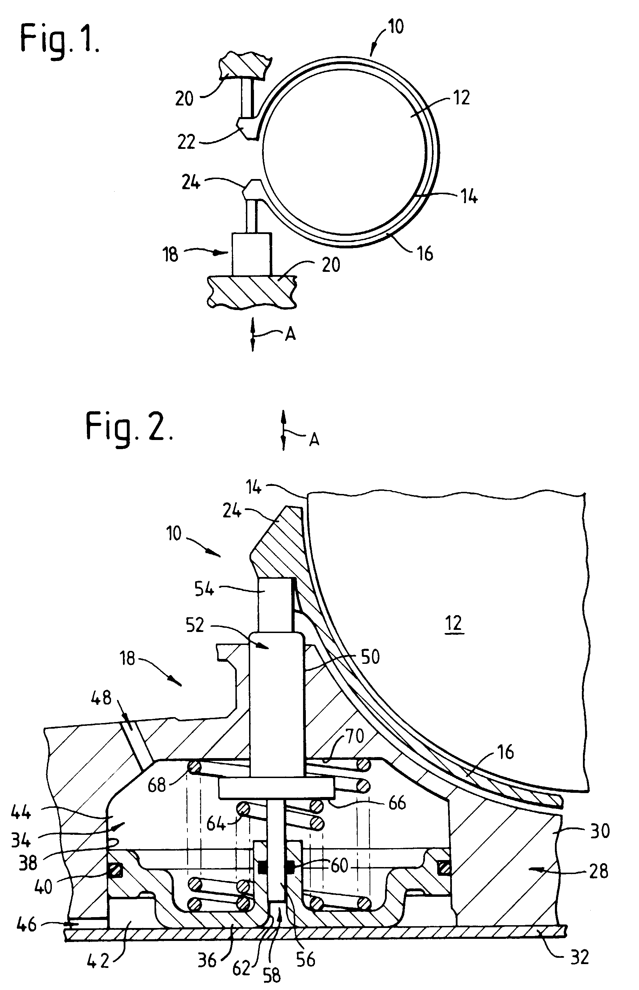

Referring to Figure 1, the band brake 10 comprises a brake drum 12 having an outer circumferential surface 14; a brake band 16 extending around the outer surface 14; and a servomechanism 18. The brake drum 12 is secured to, and rotates with, a gear (not shown) of a planetary gear train (not shown) positioned inside a casing 20 of an automatic transmission in accordance with the present invention. The gears of the planetary gear train intermesh, and their rotation relative to one another and to the casing 20 determines the drive ratio for the automatic transmission at any particular moment in time. These and other features of the automatic transmission have been omitted for the sake of clarity, but are well known to those skilled in the art. One end 22 of the brake band 16 is fixed relative to the casing 20. The other end 24 of the brake band 16 is movable by the servomechanism 18 in an axial direction A (of the servomechanism) relative to said one end 22 to bring the brake band into and out of frictional engagement with the outer surface 14 of the brake drum 12. Such action controls the rotation of the brake drum (and hence, its associated gear) relative to the casing 20 and to other gears in the planetary gear train as is required in order to provide a required drive ratio. This arrangement is well known to those skilled in the art.

The servomechanism 18 (Figure 2) comprises a housing 28 which is defined by two parts 30,32 which are secured together. One 32 of the parts of the housing 28 is secured to the casing 20 of the automatic transmission 10. A closed bore 34 is formed within the housing 28, the closed bore extending in the axial direction A. A piston 36 is positioned in the closed bore 34 and can slide in the bore in the axial direction A. The piston 36 is sealed at its outer circumference to the walls 38 of the bore 34 by an elastomeric seal 40. The piston 36 thereby divides the bore 34 into first and second chambers 42,44. The first chamber 42 is connectable to a source of pressurised hydraulic fluid by way of a pressure port 46 in the housing 28. The second chamber 44 is connected to atmospheric air by way of an exhaust port 48 in the housing 28. An aperture 50 extends through the housing 28 in the axial direction A and opens into the second chamber 44. The longitudinal axes of the aperture 50 and the bore 34 are preferably substantially aligned. A piston rod 52 passes through the aperture 50 and makes a sliding fit therein allowing the piston rod to reciprocate in the axial direction A. One end 54 of the piston rod 52 (the end positioned outside the housing 28) engages the other end 24 of the brake band 16. The other end 56 of the piston rod 52 extends into, and makes a sliding fit in, an opening 58 in the piston 36 to allow relative reciprocal movement between the piston rod and the piston in the axial direction A. An elastomeric seal 60 is positioned between the other end 56 of the piston rod 52 and the walls 62 defining the opening 58 in the piston 36 to provide a fluid tight seal between the first and second chambers 42,44. A first spring 64 is positioned in the second chamber 44 and extends between the piston 36 and a shoulder 66 formed on the piston rod 52 intermediate its ends 54,56. The first spring 64 thereby provides a resilient mounting for the piston rod 52 on the piston 36. A second spring 68 is positioned in the second chamber 44 and extends between the piston 36 and an end wall 70 of the closed bore 34. The second spring 68 biases the piston 36 towards a rest position as shown in Figure 2.

In use, the band brake 10 is actuated by applying pressurised hydraulic fluid to the first chamber 42 by way of pressure port 46. The pressurised fluid moves the piston 36 towards the end wall 70 of the closed bore 34 against the action of the second spring 68, thereby compressing the second spring. Air in the second chamber 44 is exhausted through exhaust port 48. Such movement of the piston 36 also moves the piston rod 52 in the same direction to move the said other end 24 of the brake band 16 towards said one end 22 thereof, thereby reducing the diameter of the brake band, and bringing the brake band into frictional engagement with the outer surface 14 of the brake drum 12. Further increases of fluid pressure in the first chamber 42 continues to move the piston 36 towards the end wall 70. However, the other end 56 of the piston rod 52 begins to slide in the opening 58 as such movement of the piston 36 begins to compress the first spring 64. This arrangement provides a progressive stop for the brake drum and prevents excessive wear of the brake band 16. As the brake drum 12 stops rotating relative to the casing 20, the drive ratio of the automatic transmission is changed.

The band brake 10 is de-activated by releasing the fluid pressure in the first chamber 42. The piston 36 returns to its rest position under the action of the second spring 68, and air returns to the second chamber 44 through the exhaust port 48. The inherent resilience of the brake band 16 causes the brake band to increase its diameter to release the frictional engagement with the brake drum 12 to allow the brake drum to rotate relative to the casing 20, thereby changing the drive ratio of the automatic transmission. This movement of the brake band 16 also moves the piston rod 52 back to its rest position as shown in Figure 2.

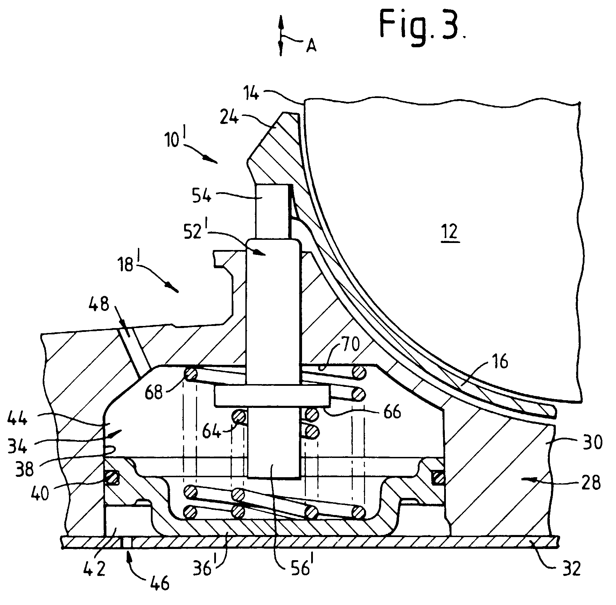

In the alternative arrangement of servomechanism 18' shown in Figure 3, like parts have been given the same reference numeral as those in Figure 2, but primed (') where changes have been made. In this arrangement, the opening in the piston 36' is omitted, and the other end 56' of the piston rod 52' remains positioned inside the second chamber 44. Other features of the servomechanism 18' are the same as those of the servomechanism 18 shown in Figure 2, and the operation of the servomechanism 18' is substantially the same as that of the servomechanism 18.

## Claims

1. An automatic transmission comprising a casing; a planetary gear train including a plurality of intermeshing gears positioned within the casing; and a band brake (10) for controlling rotation of one gear relative to the casing (20); the band brake comprising a brake drum (12) secured to said one gear and having an outer circumferential surface (14); a brake band (16) extending around, and frictionally engageable with, the outer surface of the brake drum, and having one end (22) fixed relative to the casing and the other end movable (24) in an axial direction (A) relative to said one end to control the frictional engagement; and a servomechanism (18); the servomechanism including a housing (28) which is fixed relative to the casing and having a closed bore (34) therein; a piston (36) mounted in the closed bore and slidable in the axial direction, the piston dividing the bore to define a first chamber (42) and a second chamber (44); a pressure port (46) for supplying pressurised hydraulic fluid to the first chamber; an exhaust port (48) connecting the second chamber to atmospheric air; an aperture (50) extending through the housing in the axial direction and opening into the second chamber; a piston rod (52) slidably mounted in, and extending through, the aperture, one end (54) of the piston rod being attached to said other end of the brake band; and a spring (64) positioned in the second chamber and connected between the piston rod and the piston to bias the one end of the piston rod away from the piston; wherein the other end (56) of the piston rod (52) is freely movable relative to the piston (36) during band brake application; characterised in that the other end (56) of the piston rod (52) is also freely movable relative to the piston (36) during all stages of band brake release.

2. An automatic transmission as claimed in Claim 1, wherein the spring (64) is positioned in the second chamber (44) between a shoulder (66) on the piston rod (52) and the piston (36).

3. An automatic transmission as claimed in Claim 1 or Claim 2, wherein a second spring (68) is positioned in the second chamber (44) between an end wall (70) of the closed bore and the piston (36).

4. An automatic transmission as claimed in any one of Claims 1 to 3, wherein the other end (56) of the piston rod (52) extends into, and makes a sealing sliding fit in, an opening (58) in the piston (36).

5. An automatic transmission as claimed in any one of Claims 1 to 3, wherein the other end (56') of the piston rod (52') is positioned in the second chamber (44).

6. A band brake for use in an automatic transmission as claimed in any one of Claims 1 to 5.

## Patentansprüche

1. Automatikgetriebe umfassend eine Umhüllung; ein Planetengetriebe mit einer Vielzahl von kämmenden Zahnrädern, die innerhalb der Umhüllung positioniert sind; und eine Bandbremse (10) zum Steuern der Rotation eines Zahnrades relativ zu der Umhüllung (20); wobei die Bandbremse eine Bremstrommel (12), die an dem einen Zahnrad befestigt ist und eine äußere Umfangsfläche (14) aufweist; ein Bremsband (16), das sich um die äußere Fläche der Bremstrommel herum erstreckt und über Reibung damit in Eingriff stehen kann und dessen eines Ende (22) relativ zu der Umhüllung fixiert ist und dessen anderes Ende (24) in einer axialen Richung (A) relativ zu dem anderen Ende bewegbar ist, um den Reibeingriff zu steuern; und einen Servomechanismus (18) umfaßt; wobei der Servomechanismus ein Gehäuse (28), das relativ zu der Umhüllung fixiert ist und eine geschlossene Bohrung (34) darin aufweist; einen Kolben (36), der in der geschlossenen Bohrung montiert und in der axialen Richtung verschiebbar ist, wobei der Kolben die Bohrung unterteilt, um eine erste Kammer (42) und eine zweite Kammer (44) zu definieren; ein Drucktor (46) zum Zuführen von unter Druck gesetztem Hydraulikfluid zu der ersten Kammer; ein Auslaßtor (48), das die zweite Kammer mit atmosphärischer Luft verbindet; eine Öffnung (50), die sich durch das Gehäuse in der axialen Richtung erstreckt und sich in die zweite Kammer öffnet; eine Kolbenstange (52), die verschiebbar in der Öffnung montiert ist und sich dort hindurch erstreckt, wobei ein Ende (54) der Kolbenstange an dem anderen Ende des Bremsbandes angebracht ist; und eine Feder (64) umfaßt, die in der zweiten Kammer positioniert und zwischen die Kolbenstange und den Kolben geschaltet ist, um das eine Ende der Kolbenstange von dem Kolben weg vorzuspannen; wobei das andere Ende (56) der Kolbenstange (52) relativ zu dem Kolben (36) während eines Aufbringens der Bandbremse frei bewegbar ist;
dadurch **gekennzeichnet**,
daß das andere Ende (56) der Kolbenstange (52) ebenso relativ zu dem Kolben (36) während aller Stufen eines Lösens der Bandbremse frei bewegbar ist.

2. Automatikgetriebe nach Anspruch 1,
worin die Feder (64) in der zweiten Kammer (44) zwischen einer Schulter (66) an der Kolbenstange (52) und dem Kolben (36) positioniert ist.

3. Automatikgetriebe nach Anspruch 1 oder Anspruch 2,
worin eine zweite Feder (68) in der zweiten Kammer (44) zwischen einer Endwand (70) der geschlossenen Bohrung und dem Kolben (36) positioniert ist.

4. Automatikgetriebe nach einem der Ansprüche 1 bis 3,
worin das andere Ende (56) der Kolbenstange (52) sich in eine Öffnung (58) in dem Kolben (36) erstreckt und einen dichtenden Gleitsitz darin herstellt.

5. Automatikgetriebe nach einem der Ansprüche 1 bis 3,
worin das andere Ende (56') der Kolbenstange (52') in der zweiten Kammern (44) positioniert ist.

6. Bandbremse zur Verwendung in einem Automatikgetriebe nach einem der Ansprüche 1 bis 5.

## Revendications

1. Boîte de vitesse automatique comprenant un carter, un train d'engrenages planétaires comportant une pluralité de pignons en prise les uns avec les autres placés à l'intérieur du carter, et un frein (10) à bande servant à commander la rotation d'un pignon par rapport au carter (20), le frein à bande comprenant un tambour (12) de frein fixé audit pignon et présentant une surface circonférentielle extérieure (14), une bande (16) de frein entourant, et pouvant être mise en position de contact de frottement avec la surface extérieure du tambour de frein, et présentant une extrémité (22) fixe par rapport au carter, l'autre extrémité (24) pouvant être déplacée dans une direction axiale (A) par rapport à ladite première extrémité pour commander la mise en contact de frottement, et un servomécanisme (18), le servomécanisme comprenant un carter (28) qui est fixe par rapport au carter du train d'engrenages planétaires, et dans lequel est formé un alésage fermé (34), un piston (36) monté dans l'alésage fermé et pouvant coulisser dans la direction axiale, le piston divisant l'alésage de façon à délimiter une première chambre (42) et une seconde chambre (44), un orifice de pression (46) utilisé pour fournir un fluide hydraulique sous pression à la première chambre, un orifice d'échappement (48) reliant la seconde chambre à l'air de l'atmosphère, une ouverture (50) traversant le carter du servomécanisme dans la direction axiale et débouchant dans la seconde chambre, une tige (52) de piston montée de manière coulissante dans l'ouverture et la traversant, l'une (54) des extrémités de la tige de piston étant fixée à ladite autre extrémité de la bande de frein, et un ressort (64) placé dans la seconde chambre et interposé entre la tige de piston et le piston pour rappeler la première extrémité de la tige de piston en l'éloignant du piston, dans laquelle l'autre extrémité (56) de la tige (52) de piston peut être déplacée librement par rapport au piston (36) pendant le serrage du frein à bande,
caractérisée en ce que l'autre extrémité (56) de la tige (52) de piston peut aussi être déplacée librement par rapport au piston (36) pendant toutes les étapes de desserrage du frein à bande.

2. Boîte de vitesse automatique selon la revendication 1, dans laquelle le ressort (64) est placé dans la seconde chambre (44) entre un épaulement (66) formé sur la tige (52) de piston et le piston (36).

3. Boîte de vitesse automatique selon la revendication 1 ou la revendication 2, dans laquelle un second ressort (68) est placé dans la seconde chambre (44) entre une paroi d'extrémité (70) de l'alésage fermé et le piston (36).

4. Boîte de vitesse automatique selon l'une quelconque des revendications 1 à 3, dans laquelle l'autre extrémité (56) de la tige (52) de piston s'étend à l'intérieur d'une ouverture (58) ménagée dans le piston (36) et réalise un ajustement coulissant d'étanchéité dans cette ouverture.

5. Boîte de vitesse automatique selon l'une quelconque des revendications 1 à 3, dans laquelle l'autre extrémité (56') de la tige (52') de piston est placée dans la seconde chambre (44).

6. Frein à bande destiné à être utilisé dans une boîte à vitesse automatique selon l'une quelconque des revendications 1 à 5.
